Europäisches Patentamt

European Patent Office

Office européen des brevets

(11) Veröffentlichungsnummer: **0 236 558**
**A1**

(19)

## EUROPÄISCHE PATENTANMELDUNG

(12)

(21) Anmeldenummer: 86116279.0

(22) Anmeldetag: 24.11.86

(51) Int. Cl.⁴: **H04L 27/22** , H04B 1/66

(30) Priorität: 22.01.86 CH 244/86

(43) Veröffentlichungstag der Anmeldung:
16.09.87 Patentblatt 87/38

(84) Benannte Vertragsstaaten:
BE CH DE FR GB IT LI NL SE

(71) Anmelder: BBC Aktiengesellschaft Brown,
Boveri & Cie.
Haselstrasse
CH-5401 Baden(CH)

(72) Erfinder: Hagmann, Walter, Dr.
Pilgerstrasse 22
CH-5405 Dättwil-Baden(CH)

(54) **Verfahren zur Uebertragung digitaler Daten.**

(57) Bei einem Verfahren zur Uebertragung digitaler Daten mittels Phasenmodulation (PSK) und "frequency hopping", bei welchem zur kohärenten Demodulation als Synchronisationsinformation die Symbole (A, ..., F) in unterschiedlichen Uebertragungsabschnitten (I, ..., IV) mehrfach übertragen werden, werden für jedes Symbol Gewichtungsfaktoren berechnet, welche die Existenz und den Einfluss eines Störers berücksichtigen.

Die Symbolwerte werden mit diesen Gewichtungsfaktoren multipliziert, bevor die Werte korrespondierender Symbole linear kombiniert und zur Auswertung herangezogen werden.

FIG.1

EP 0 236 558 A1

## Verfahren zur Uebertragung von digitalen Daten

Die vorliegende Erfindung betrifft ein Verfahren zur Uebertragung von digitalen Daten gemäss dem Oberbegriff des Anspruchs 1.

Phasenmodulation, nachfolgend kurz PSK (Phase Shift Keying) genannt, ist eine Uebertragungsmethode, bei welcher die Information in der absoluten Phase einer Trägerschwingung untergebracht ist. Ein solches Modulationsverfahren ist naturgemäss für solche Nachrichtenkanäle wenig geeignet, in denen schnelle Phasenschwankungen oder grosse Phasensprünge auftreten.

Generell können Störungen in den verwendeten Kanälen, die auf ein schmales Frequenzband beschränkt sind, dadurch wirksam bekämpft werden, dass die Trägerfrequenz pseudozufällig über einen grösseren Satz von Frequenzen sprunghaft geändert wird. Bei diesem kurz FH (Frequency Hopping) genannten Verfahren werden auf jeder Trägerfrequenz eine bestimmt Anzahl von Datenbits übertragen, bevor das System auf die nächste Trägerfrequenz überspringt.

Da FH üblicherweise einen zufälligen Wechsel der Trägerphase beim Wechsel der Trägerfrequenz nach sich zieht, der entweder durch den verwendeten Modulator oder den Kanal selbst verursacht sein kann, ergibt sich, dass unter normalen Umständen PSK und FH nicht kompatibel sind, weil die zufällige Phasenänderung einer kohärenten Demodulation entgegensteht.

Gleichwohl sind in der Literatur (Simon, M.K. et Polydoros, A., IEEE Transactions On Communications, Vol. COM-29, No. 11, Nov. 1981, S. 1644 f.) Untersuchungen über ein kombiniertes FH/PSK-System angestellt worden, ohne jedoch auf die technische Realisierung der kohärenten Demodulation, d.h. der Synchronisation zwischen Sender und Empfänger, einzugehen.

In der schweizerischen Patentanmeldung Nr. 3068/85-1 ist nun ein FH/PSK-Verfahren vorgeschlagen worden, bei dem zur Synchronisation des Empfängers alle aufmodulierten Symbole in bestimmter Weise mehrfach übertragen werden, wobei die Wiederholung der Symbole in Uebertragungsabschnitten mit unterschiedlicher Trägerfrequenz erfolgt.

Aus der Mehrfachübertragung der Symbole lassen sich dann detaillierte Aussagen über die Lage der Trägerphase in jedem, einer Trägerfrequenz zugeordneten Uebertragungsabschnitt gewinnen.

Das FH/PSK-Verfahren mit kohärenter Demodulation hat gegenüber nicht-kohärenten Uebertragungsverfahren wesentliche Vorteile. Diese Vorteile bleiben selbst bei Anwesenheit von Störern erhalten, wenn der Einfluss der Störer bzw. deren Anwesenheit festgestellt und berücksichtigt werden kann.

Aufgabe der vorliegenden Erfindung ist es nun, dass beschriebene kohärente FH/PSK-Verfahren dahingehend zu modifizieren, dass das Auftreten von Störern in vorteilhafter Weise bei der Datenübertragung berücksichtigt wird.

Die Aufgabe wird bei einem Verfahren der eingangs genannten Art durch die Merkmale aus dem Kennzeichen des Anspruchs 1 gelöst.

Die vorausgesetzte Mehrfachübertragung stellt redundante Information aus verschiedenen Uebertragungsabschnitten mit verschiedenen Trägerfrequenzen zur Verfügung, die durch die Anwesenheit eines Störers unterschiedlich beeinflusst wird. Die Verlässlichkeit der Information aus einem Uebertragungsabschnitt ist umso grösser, je näher die Phase des zugehörigen Symbols einem der m diskreten, erlaubten Phasenwerte, bezogen auf die Trägerphase des jeweiligen Uebertragungsabschnitts, kommt.

Aus dieser Nähe zu den erlaubten Werten wird dann ein Gewichtungsfaktor abgeleitet und dem entsprechenden Symbol zugeordnet, so dass in die Auswertung der übertragenen Information diejenigen Symbole besonders stark eingehen, die besonders nahe an einem der erlaubten Phasenwerte liegen.

Als Referenzphase für einen Uebertragungsabschnitt wird dabei ein Phasenmittelwert verwendet, der sich nach einer Abbildung der m erlaubten Phasenwerte auf einen einzigen Phasenwert durch Mittelung über alle Symbole eines Uebertragungsabschnitts ergibt.

Aus dem Phasenwert jedes Symbols und dem Phasenmittelwert des zugehörigen Uebertragungsabschnitts ergibt sich eine Phasendifferenz, die einem der m erlaubten Phasenwerte entspräche, wenn die Uebertragung ideal wäre, im Realfall aber von den m Phasenwerten mehr oder weniger stark abweicht.

Der Gewichtungsfaktor für jedes Symbol hat nun von der mit $m/2$ multiplizierten Phasendifferenz eine solche funktionelle Abhängigkeit, dass er unendlich wird, wenn die multiplizierte Phasendifferenz modulo $n$ zu 0 wird und zu 0 wird, wenn die multiplizierte Phasendifferenz modulo $\pi$ den Wert $\pi/2$ annimmt.

Als besonders günstig hat es sich erwiesen, die funktionelle Abhängigkeit als Inverse der Tangensfunktion, d.h. als 1/tan x zu wählen.

Die Erfindung soll nun nachfolgend anhand von Ausführungsbeispielen im Zusammenhang mit der Zeichnung näher erläutert werden. Es zeigen:

Fig. 1 die schematische Darstellung mehrerer Uebertragungsabschnitte mit unterschiedlichen Trägerfrequenzen und mehrfach übertragenen Symbolen in einem Frequenz-Zeit-Diagramm;

Fig. 2 das Ausführungsbeispiel einer an sich bekannten Anordnung zur Ermittlung der Phasenmittelwerte im Blockschaltbild;

Fig. 3 eine beispielhafte Anordnung zur Verarbeitung der gewichteten Phaseninformationen.

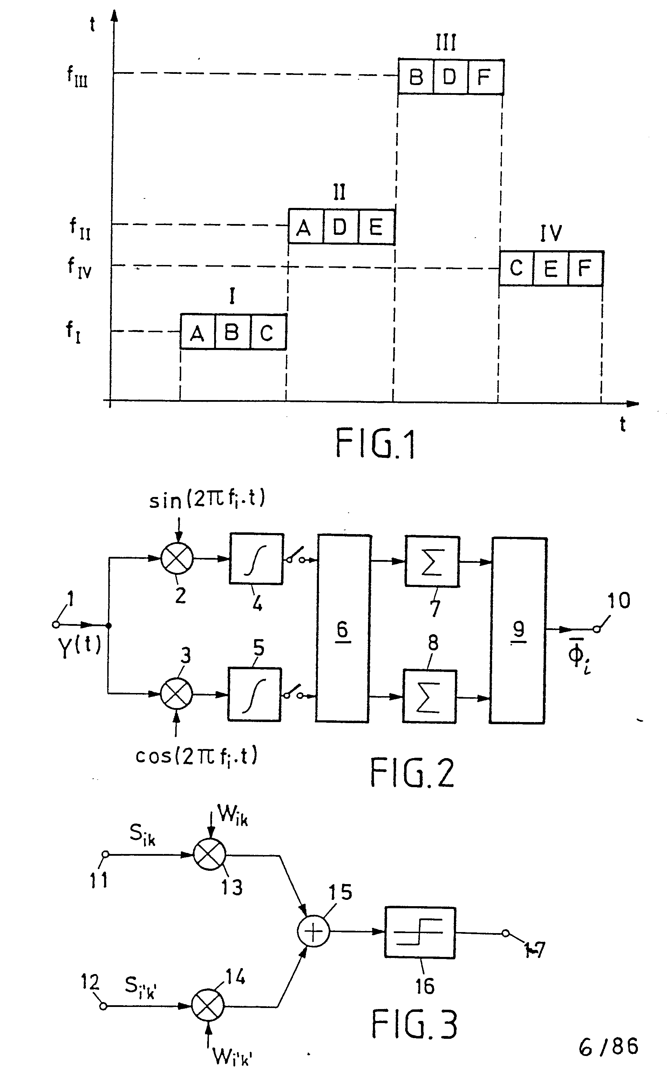

Die Erfindung geht aus von einem FH/PSK-Verfahren mit m diskreten, erlaubten Phasenwerten, auch kurz FH/m-PSK-Verfahren genannt. Das Uebertragungsschema eines solches Verfahrens im Frequenz-Zeit-Diagramm ist in Fig. 1 ausschnittsweise wiedergegeben.

Aus einer fortlaufenden Folge von Uebertragungsabschnitten sind in der Fig. 1 die vier Uebertragungsabschnitte I, ..., IV ausgewählt. Im Beispiel der Fig. 1 sind alle Uebertragungsabschnitte, auch Blöcke genannt, gleich lang und enthalten gleich viele, nämlich jeweils drei Symbole A, ..., F.

Jedem Uebertragungsabschnitt ist eine andere Trägerfrequenz $f_I$, ... $f_{IV}$ zugeordnet. Die Symbole A, B, C des ersten Uebertragungsabschnitts werden durch Phasenmodulation der Trägerfrquenz $f_I$ übertragen, die Symbole A, D, E des Uebertragungsabschnitts II durch Modulation der Trägerfrquenz $f_{II}$ usw.,

Jedes der sechs Symbole A, ..., F wird mehrfach übertragen, im Beispiel der Fig. 1 zweifach - (dual diversity). So ist das Symbol A in den Uebertragungsabschnitten I und II enthalten, das Symbol C in den Uebertragungsabschnitten I und IV und so fort.

Zu kohärenten Demodulation muss nun für jeden der vier Uebertragungsabschnitte I, ..., IV die Trägerphase ermittelt werden, um die Phasenlage relativ zur Trägerphase für jedes Symbol bestimmen zu können. Dabei ist davon auszugehen, dass die tatsächlichen Phasenwerte nicht genau den m erlaubten Phasenwerten entsprechen, sondern um diese Werte streuen.

Die Trägerphase eines jeden Uebertragungsabschnitts lässt sich nun durch ein Schätzerfahren bestimmen, wie es z.B. aus dem Artikel von A.J. Viterbi und A.M. Viterbi, IEEE Transactions On Information Theory, Vol. IT-29, No. 4, July 1983, S. 543 f. bekannt ist. Eine rückkopplungsfreie Anordnung zur Durchführung eines solchen Schätzverfahrens ist in Fig. 2 dargestellt.

Das phasenmodulierte Empfangssignal y(t) gelangt über Signaleingang 1 auf zwei Multiplizierer 2 und 3, in denen es mit einer Funktion $\sin(2\pi f_i t)$ bzw. $\cos(2\pi f_i t)$ multipliziert und damit in seine zwei Quadraturzweige zerlegt wird. Die Trägerfrequenz $f_i$ ist dabei gerade diejenige Trägerfrequenz, die im auszuwertenden Uebertragungsabschnitt verwendet worden ist, also z.B. $f_i = f_{II}$ bei Auswertung des Uebertragungsabschnitts II.

Da die Phase in jedem Uebertragungsabschnitt nach Voraussetzung m verschiedene Sollwerte annehmen kann, lässt sich die Trägerphase durch eine Mittelung über die verschiedenen Symbole eines Uebertragungsabschnitts nur dann bestimmen, wenn zuvor durch eine Transformation die m erlaubten Phasenwerte auf einen Phasenwert abgebildet worden sind, so dass die Phasenwerte aller Symbole eines Blocks nur um einen Sollwert streuen.

Bei m äquidistanten Phasenwerten kann eine solche Abbildung durch Potenzierung des Empfangssignals mit der Potenz m erreicht werden.

In einer Anordnung gemäss Fig. 2, bei der das Empfangssignal in seine Quadraturzweige zerlegt und nach Quadraturzweigen getrennt verarbeitet wird, muss in einer Transformationsschaltung 6 zunächst eine Transformation von kartesischen auf Polar-Koordinaten vorgenommen und die Phase dann mit m multipliziert werden, wie in dem genannten Artikel von Viterbi und Viterbi näher erläutert ist.

Vor der Transformationsschaltung 6 sind noch zwei Integratoren 4 und 5 vorgesehen, welche die Frequenzanteile in den Ausgangssignalen der Multiplikatoren 2 und 3 wegfiltern.

Zwischen den Integratoren 4 und 5 und der Transformationsschaltung ist durch zwei Schalter - schematisch angedeutet, dass die Quadraturzweige jeweils zum optimalen Abtastzeitpunkt abgetastet werden.

An den Ausgängen der Transformationsschaltung 6 steht für jedes Symbol eines Uebertragungsabschnitts ein Wertepaar zur Verfügung, welches um ein bestimmtes, für den jeweiligen Uebertragungsabschnitt charakteristisches, mittleres Wertepaar streut.

Die Werte der Wertepaare werden für alle Symbole eines Uebertragungsabschnitts in zwei Summierern 7 und 8 getrennt aufsummiert und zur Bildung von Mittelwerten herangezogen, aus denen durch Anwendung der Inversen der Tangensfunktion in einem Phasenrechner 9 ein Phasenmittelwert $\varphi_i$ für den i-ten Uebertragungsabschnitt abgeleitet wird, der am Phasenausgang 10 zur weiteren Verwendung abgenommen werden kann. Einzelheiten zu diesem Verfahren können dem Artikel von Viterbi und Viterbi entnommen werden.

Aufgrund der beschriebenen Transformation der Quadraturzweige in der Transformationsschaltung 6 ist dem Phasenmittelwert $\overline{\varphi}_i$ eine m-fache Phasenunsicherheit eigen, d.h. er ist m-fach entartet. Diese Entartung kann nun dadurch beseitigt werden, dass die Mehrfachübertragung jedes Symbols in verschiedenen Uebertragungsabschnitten ausgewertet wird. Wie diese Auswertung im einzelnen vor sich geht, ist Gegenstand der bereits erwähnten Schweizer Patentanmeldung Nr. 3068/85-1 und soll hier nicht näher erläutert werden.

In gleicher Weise, wie in einer Anordnung gemäss Fig. 2 ein m-fach entarteter Phasenmittelwert $\overline{\varphi}_i$ für jeden Uebertragungsabschnitt als Referenz gewonnen werden kann, lässt sich durch eine ähnliche Anordnung, in der die Transformationsschaltung 6 und die Summierer 7 und 8 weggelassen sind, jedem Symbol A, ..., F eine Symbolphase $\phi_{ik}$ zuordnen, wobei der Index i den Uebertragungsabschnitt und der Index k das Symbol innerhalb des Uebertragungsabschnitts kennzeichnet.

Bei einer idealen Uebertragung nehmen alle Symbolphasen $\phi_{ik}$ einen von m festen Phasenwerten ein. Entsprechend ergibt sich ein Phasenmittelwert $\overline{\varphi}_i$ ohne Streuung. Die Phasendifferenzen $\Delta\phi_{ik} = /\phi_{ik} - \overline{\varphi}_i/$ sind gleich den m erlaubten Phasenwerten. Bei Störungen ergibt sich dagegen eine mehr oder weniger grosse Streuung um die erlaubten Phasenwerte, die erfindungsgemäss dazu herangezogen wird, um den Symbolen A, ..., F bestimmte Gewichtungsfaktoren $W_{ik}$ zuzuordnen, die ein Ausdruck für die Verlässlichkeit des jeweiligen empfangenen Symbols sind.

Die Gewichtungsfaktoren $W_{ik}$ richten sich nach den Phasendifferenzen $\Delta\phi_{ik}$ mit einer funktionellen Abhängigkeit, die so gewählt ist, dass

$$W_{ik} = \infty, \text{ wenn } \frac{m}{2} \bullet \Delta\phi_{ik} \bmod \pi = 0$$
(1)
$$W_{ik} = 0, \text{ wenn } \frac{m}{2} \bullet \Delta\phi_{ik} \bmod \pi = \frac{\pi}{2}$$

gilt.

Diese funktionelle Abhängigkeit lässt sich vorteilhafterweise durch die Inverse der Tangensfunktion, d.h. $f(x) = 1/\tan(x)$ erreichen. Sie gewährleistet, dass einem Symbol, dessen Phasendifferenz $\Delta\phi_{ik}$ zwischen zwei benachbarten der m erlaubten Phasenwerte liegt, der Gewichtungsfaktor $W_{ik} = 0$ zugeordnet wird, dieses Symbol also bei der Auswertung nicht berücksichtigt wird, dass aber andererseits einem Symbol, dessen Phasendifferenz $\Delta\phi_{ik}$ genau einem der m erlaubten Phasenwerte entspricht, der Gewichtungsfaktor $W_{ik}$ = ∞ zugeordnet wird, dieses Symbol also bei der Auswertung vor gleichen Symbolen aus anderen Uebertragungsabschnitten absoluten Vorrang erhält.

Sind die Gewichtungsfaktoren $W_{ik}$ für die verschiedenen Symbole und Uebertragungsabschnitte bestimmt worden, kann eine Weiterverarbeitung z.B. in einer Anordnung gemäss Fig. 3 erfolgen. Die verschiedenen Symbolwerte $S_{ik}$ und $S_{i'k'}$ eines mehrfach (in vorliegendem Fall zweifach) übertragenen Symbols gelangen über zwei Symboleingänge 11 und 12 auf zwei Multiplizierer 13 und 14, wo sie mit den zugehörigen, nach dem oben beschriebenen Verfahren bestimmten Gewichtungsfaktoren $W_{ik}$ und $W_{i'k'}$ multipliziert werden.

In einem nachfolgenden Summierer 15 wird aus den multiplizierten Werten eine Linearkombination gebildet und das Ergebnis einer an sich bekannten Entscheidungsschaltung 16 zugeführt, die beispielsweise eine sogenannte Schwellwertentscheidung für m = 2 (hard decision) trifft, um die endgültige Entscheidung über die Informationsbit-Werte zu erhalten.

Durch die Mehrfachübertragung von Informationen mit einer zusätzlichen, einen Störer berücksichtigenden Gewichtung wird eine möglichst weitgehende Unterdrückung des Störeinflusses erreicht. Am Datenausgang 17 können dann Informationen entnommen werden, die weitgehend störungsfrei sind.

Auf diese Weise werden die Vorteile einen kohärent arbei tenden FH/m-PSK-Systems auch bei der Anwesenheit eines Störers weitgehend erhalten.

Besonders günstig lässt sich das Verfahren realisieren, wenn die Daten jeweils zweifach übertragen werden, wobei niemals zwei Symbole eines Uebertragungsabschnitts in einem anderen Uebertragungsabschnitt zusammen wiederholt werden, weil in diesem Fall die Kanalkapazität trotz der Mehrfachübertragung sehr gut ausgenutzt wird.

**Ansprüche**

1. Verfahren zur Uebertragung von digitalen Daten, bei welcher Uebertragung

a) die Daten durch Phasenmodulation einer Trägerfrequenz mit m diskreten, erlaubten Phasenwerten übermittelt werden;

b) die fortlaufende Folge von übertragenen Symbolen in einzelne Uebertragungsabschnitte fester Länge unterteilt ist, welche Uebertragungsabschnitte jeweils eine Mehrzahl von Symbolen enthalten;

c) innerhalb jedes Uebertragungsabschnitts eine feste Trägerfrequenz verwendet und die Trägerfrequenz von einem Uebertragungsabschnitt zum nächsten sprunghaft geändert wird; und

d) die Daten zur Ermöglichung einer kohärenten Demodulation mehrfach übertragen werden, wobei unterschiedliche Uebertragungsabschnitte verwendet werden, dadurch gekennzeichnet, dass zur Berücksichtigung des Einflusses eines Störers auf die Uebertragung

e) für jeden Uebertragungsabschnitt (I, ..., IV) aus den Symbolen (A, ..., F) des Uebertragungsabschnitts (I, ..., IV) ein Phasenmittelwert ($\overline{\varphi}_i$) ermittelt wird,

f) für jedes Symbol (A, ..., F) innerhalb eines Uebertragungsabschnitts (I, ..., IV) die Phasendifferenz ($\Delta\phi_{ik}$) zwischen der Symbolphase ($\phi_{ik}$) und dem Phasenmittelwert ($\overline{\varphi}_i$) des zugehörigen Uebertragungsabschnitts (I, ..., IV) bestimmt wird;

g) jedem Symbol (A, ..., F) ein die Zuverlässigkeit der Uebertragung charakterisierender Gewichtungsfaktor ($W_{ik}$, $W_{i'k'}$) zugeordnet wird, welcher funktionell von der mit m/2 multiplizierten Phasendifferenz ($\Delta\phi_{ik}$) abhängt, wobei

h) die funktionelle Abhängigkeit derart gewählt ist, dass

$$W_{ik} = \infty, \text{ wenn } \frac{m}{2} \bullet \Delta\phi_{ik} \bmod \pi = 0$$

bzw.

$$W_{ik} = 0, \text{ wenn } \frac{m}{2} \bullet \Delta\phi_{ik} \bmod \pi = \frac{\pi}{2} \text{ ; und}$$

i) bei der Demodulation die Symbolwerte ($S_{ik}$, $S_{i'k'}$) der Symbole (A, ..., F) zunächst mit den zugehörigen Gewichtungsfaktoren ($W_{ik}$, $W_{i'k'}$) multipliziert und dann aus einer Linearkombination korrespondierender Symbolwerte die endgültigen Werte ermittelt werden.

2. Verfahren nach Anspruch 1, dadurch gekennzeichnet, dass die funktionelle Abhängigkeit der Gewichtungsfaktoren ($W_{ik}$, $W_{i'k'}$) von der mit m/2 multiplizierten Phasendifferenz ($\Delta\phi_{ik}$) der Inversen der Tangensfunktion entspricht.

3. Verfahren nach Anspruch 1, dadurch gekennzeichnet, dass zur Ermittlung der Phasenmittelwerte ($\overline{\varphi}_i$) in einem rückkopplungsfreien Phasendetektor durch Transformation die m diskreten, erlaubten Phasenwerte auf einen Phasenwert abgebildet werden und der Phasenmittelwert ($\overline{\varphi}_i$) als Mittelwert der transformierten Phasenlagen aller Symbole (A, ..., F) eines Uebertragungsabschnitts (I, ..., IV) gebildet wird.

4. Verfahren nach Anspruch 3, dadurch gekennzeichnet, dass das phasenmodulierte Empfangssignal in seine Quadraturzweige zerlegt und die Mitteilung für die Quadraturzweige getrennt durchgeführt wird.

5. Verfahren nach Anspruch 1, dadurch gekennzeichnet, dass die Daten jeweils zweifach übertragen werden, wobei niemals zwei Symbole (A, ..., F) eines Uebertragungsabschnitts (I, ..., IV) in einem anderen Uebertragungsabschnitt (I, ..., IV) zusammen wiederholt werden.

FIG.1

$\sin(2\pi f_i \cdot t)$

$Y(t)$

$\cos(2\pi f_i \cdot t)$

$\overline{\Phi}_i$

FIG.2

$W_{ik}$

$S_{ik}$

$S_{i'k'}$

$W_{i'k'}$

FIG.3

6/86

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | IEEE TRANSACTIONS ON INFORMATION THEORY, Band IT-29, Nr. 4, Juli 1983, Seiten 543-551, IEEE, New York, US; A.J. VITERBI et al.: "Nonlinear estimation of PSK-modulated carrier phase with application to burst digital transmission" <br> * Seite 544, linke Spalte, Zeilen 24-27; Seite 545; Figur 2 * | 1 | H 04 L 27/22 <br> H 04 B 1/66 |
| | --- | | |
| A | US-A-4 466 108 (RHODES) <br> * Spalte 7, Zeilen 26-46 * | 1 | |
| | --- | | |
| A | US-A-3 987 422 (YANAGIDAIRA) <br><br> * Spalte 2, Zeilen 19-27,42-58 * | | |
| | ----- | | RECHERCHIERTE SACHGEBIETE (Int. Cl.4) |
| | | | H 04 L <br> H 04 B |

Der vorliegende Recherchenbericht wurde für alle Patentansprüche erstellt.

| Recherchenort | Abschlußdatum der Recherche | Prüfer |
|---|---|---|
| DEN HAAG | 29-04-1987 | VEAUX,C.J. |